# EUROPEAN PATENT APPLICATION

(11) **EP 4 224 564 A1**
(43) Date of publication of application: **09.08.2023**
(21) Application number: 21874950.5
(22) Date of filing: 18.08.2021
(51) Int. Cl.: H01M 4/134, H01M 10/052, H01M 10/0567, H01M 10/0569

(54) **LITHIUM SECONDARY BATTERY**

(30) Priority: 30.09.2020 JP 2020165122
(71) Applicant: Panasonic Intellectual Property Management Co., Ltd., Osaka-shi, Osaka 540-6207 (JP)
(72) Inventor: TERADA, Shoshi, Osaka-shi, Osaka 540-6207 (JP); KANO, Akira, Osaka-shi, Osaka 540-6207 (JP)
(74) Representative: Novagraaf International SA
(86) International application number: PCT/JP2021/030126
(87) International publication number: WO 2022/070647

(57) **Abstract**

A lithium secondary battery includes a positive electrode, a negative electrode, a separator disposed between the positive electrode and the negative electrode, and a non-aqueous electrolyte, wherein in the negative electrode, lithium metal deposits during charging and the lithium metal dissolves during discharging, the non-aqueous electrolyte includes a fluoroalcohol, an oxalate complex anion including fluorine, a lithium ion, and a non-aqueous solvent.

## Description

### [Technical Field]

The present disclosure relates to a lithium secondary battery.

### [Background Art]

Lithium ion secondary batteries have been known as a high capacity secondary battery. In lithium ion secondary batteries, for example, a carbon material is used as the negative electrode active material. The carbon material performs charge/discharge by reversibly inserting and eliminating lithium ions.

Meanwhile, a lithium secondary battery (also called lithium metal secondary battery) in which lithium metal is used as the negative electrode active material has an even higher theoretical capacity density. In lithium secondary batteries, lithium metal deposits on the negative electrode current collector during charging, and the deposited lithium metal dissolves in the non-aqueous electrolyte during discharging.

However, in lithium secondary batteries, it is difficult to control the deposition form of lithium metal. When lithium metal deposits in a dendritic form, the specific surface area of the negative electrode increases and side reactions with the non-aqueous electrolyte increase. Also, inactive lithium that cannot contribute to charge/discharge generates, which causes a decrease in the discharge capacity.

Patent Literature 1 discloses a metal lithium battery, in which the capacity attenuation by charge/discharge cycles is suppressed. The metal lithium battery includes a cathode, a metal lithium anode, and a non-aqueous fluid electrolyte, and the non-aqueous fluid electrolyte includes an anion having an oxalate complex including fluorine.

### [Citation List]

### [Patent Literature]

PLT1: Japanese Republication of International Application No. 2018-501615

### [Summary of Invention]

The method proposed by Patent Literature 1 is insufficient for improving charge/discharge cycle characteristics of lithium secondary batteries.

A lithium secondary battery of the present disclosure includes a positive electrode, a negative electrode, a separator disposed between the positive electrode and the negative electrode, and a non-aqueous electrolyte, wherein in the negative electrode, lithium metal deposits during charging and the lithium metal dissolves during discharging, and the non-aqueous electrolyte includes a fluoroalcohol, an oxalate complex anion including fluorine, a lithium ion, and a non-aqueous solvent.

With the present disclosure, charge/discharge cycle characteristics of lithium secondary batteries can be improved.

### [Description of Embodiments]

A lithium secondary battery of the present disclosure includes a positive electrode, a negative electrode, and a non-aqueous electrolyte. In the negative electrode, lithium metal deposits during charging. The lithium metal deposited in the negative electrode dissolves in the non-aqueous electrolyte during discharging as lithium ion. Specifically, the negative electrode has at least a negative electrode current collector, and lithium metal deposits on the negative electrode current collector. The lithium secondary battery of the present disclosure is also called a lithium metal secondary battery.

In lithium (metal) secondary batteries, for example, 70% or more of the rated capacity is exhibited by deposition and dissolution of lithium metal. Electron movement during charging and during discharging in the negative electrode is mainly due to lithium metal deposition and dissolution in the negative electrode. Specifically, 70 to 100% (e.g., 80 to 100% or 90 to 100%) of the electron movement (in another view, electric current) is due to deposition and dissolution of lithium metal during charging and during discharging at the negative electrode. That is, the negative electrode of this embodiment is different from a type of negative electrode in which a negative electrode active material such as graphite stores and releases lithium ions during charging and during discharging.

In lithium metal secondary batteries, projective deposits may be generated during charging at the negative electrode. With the projective deposits as a core, dendritic deposition of lithium metal extends. When the projective deposits (hereinafter, referred to as dendrite precursor) are left unattended, it is difficult to suppress dendritic deposition. When the lithium metal deposits as dendrites at the negative electrode, the specific surface area of lithium metal increases. In this manner, side reactions between lithium metal and the non-aqueous electrolyte increase even more. As a result, decrease in the discharge capacity becomes more significant, and cycle characteristics tend to significantly decrease easily.

The non-aqueous electrolyte includes a fluoroalcohol, an oxalate complex anion including fluorine, lithium ions, and a non-aqueous solvent.

When the non-aqueous electrolyte includes the oxalate complex anion including fluorine, the oxalate complex anion including fluorine decomposes along with battery charge/discharge, and the lithium metal surface is covered thinly and homogeneously with a decomposition product of the oxalate complex anion including fluorine. It is considered that a salt including the anion decomposes at a higher potential than other additives or solvents included in the non-aqueous electrolyte, and a thin and homogenous coating is formed at the deposited lithium metal surface. Lithium metal deposits mainly between the coating and the negative electrode current collector. The coating presses the lithium metal, and suppresses extension of the dendritic deposition.

However, the effects of suppressing the dendrites generation with the oxalate complex anion including fluorine are not sufficient. This is because the coating derived from the oxalate complex anion including fluorine cannot follow the changes in the surface shape of lithium metal with repetition of charge/discharge cycles, and a portion where the coating is not formed may be generated on the lithium metal surface.

The non-aqueous electrolyte of the present disclosure further includes a fluoroalcohol. When the non-aqueous electrolyte further includes a fluoroalcohol, compared with the case where the non-aqueous electrolyte does not include any fluoroalcohol, dendrite generation at the negative electrode is further suppressed.

When an oxalate complex anion including fluorine of the above-described range is used, effects of suppressing dendrite generation at the negative electrode that are achieved by further adding the fluoroalcohol described later are significantly achieved.

Although the mechanism of further suppression by the fluoroalcohol of the dendrite generation is not clear, it is assumed that interaction between the inorganic fluoride coating formed on the negative electrode and derived from the oxalate complex anion including fluorine and the fluoroalcohol adds an organic fluoride component derived from the fluoroalcohol in the coating, which forms a stronger and highly flexible organic fluoride coating. This organic fluoride coating can easily follow the changes in the surface shape when lithium metal dissolves. That is, the coating is always in contact with lithium metal, and easily brings out the effects of pressing. As a result, generation of the dendrite precursor is significantly suppressed, and the dendrite precursor is decreased, which significantly improves the effects of suppressing the deposition of lithium metal in dendritic form.

However, when the oxalate complex anion including fluorine is not present in the non-aqueous electrolyte, the effects of suppressing dendrite generation by adding the fluoroalcohol are small. It is assumed that the inorganic fluoride coating derived from the oxalate complex anion including fluorine is not formed on the negative electrode, and therefore interaction between the coating and fluoroalcohol does not occur.

The oxalate complex anion including fluorine is, for example, derived from an oxalate complex salt including fluorine. For the oxalate complex salt including fluorine, for example, an oxalate complex lithium salt including fluorine can be used, without limitation.

Preferably, the oxalate complex anion including fluorine contains boron (B) or phosphorus (P). Examples of the oxalate complex anion including fluorine and boron include difluorooxalateborate anion (BF₂(C₂O₄)⁻) (hereinafter, referred to as FOB anion). Examples of the oxalate complex anion including fluorine and phosphorus include PF₄(C₂O₄)-, PF₂(C₂O₂)₂-, etc. In particular, the oxalate complex anion including fluorine and boron is preferable in terms of forming a coating that is stable even under a high temperature on the lithium metal surface, more than the oxalate complex anion including fluorine and phosphorus, and FOB anion is the most preferable.

In the non-aqueous electrolyte, the concentration C₁ of the oxalate complex anion including fluorine may be, in terms of easily forming an inorganic fluoride coating derived from the oxalate complex anion including fluorine on the negative electrode, for example, 0.1 mmol/L or more, 10 mmol/L or more, or 80 mmol/L or more. It may be 500 mmol/L or less, 300 mmol/L or less, or 150 mmol/L or less.

Preferably, the fluoroalcohol is a fluoroalcohol A represented by a general formula (1): R-OH(R = Cₓ₁H_{y1}F_{z1}; x1, z1 is an integer of 1 or more, y1 is an integer of 0 or more). Preferably, in particular, in view of easily forming the organic fluoride coating, it is at least one of 2,2,2-trifluoroethanol (CF₃CH₂OH), 2,2,3,3,3-pentafluoro-1-propanol (CF₃CF₂CH₂OH), and 2,2,3,3-tetrafluoro-1-propanol (CHF₂CF₂CH₂OH), and more preferably it includes at least 2,2,2-trifluoroethanol.

The amount of the fluoroalcohol included in the non-aqueous electrolyte may be 5 ppm or more relative to a total amount of the non-aqueous electrolyte. In view of easily causing interaction with the inorganic fluoride coating derived from the oxalate complex anion including fluorine, it may be 10 ppm or more, 50 ppm or more, or 100 ppm or more. It may be preferably 1500 ppm or less, 1000 ppm or less, 500 ppm or less, or 250 ppm or less.

When the fluoroalcohol of the above-described range is used, the effects of suppressing generation of the dendrite precursor or dendritic deposition are significantly achieved. However, in batteries, the fluoroalcohol is consumed for the interaction with the inorganic fluoride coating derived from the oxalate complex anion including fluorine, and therefore when analyzing the non-aqueous electrolyte taken out from the battery, the fluoroalcohol content may be less than 5 ppm. Meanwhile, the fluoroalcohol is rarely consumed completely. In view of achieving the effects of the present disclosure, the non-aqueous electrolyte taken out from the battery should include the fluoroalcohol of the detection limit or more.

The non-aqueous solvent included in the non-aqueous electrolyte preferably includes an ether compound. The ether compound has a high reduction resistance in the negative electrode, and hardly causes side reactions with the lithium metal. The ether compound may be, for example, preferably 50 vol% or more, 60 vol% or more, 70 vol% or more, 90 vol% or more of the entire non-aqueous solvent, or the non-aqueous solvent may be entirely ether compound.

In the non-aqueous electrolyte, the content of the components is determined by, for example, using high-performance liquid chromatography, gas chromatography-mass spectrometry (GC-MS), nuclear magnetic resonance (NMR), inductively coupled plasma-mass spectrometry (ICP-MS), elemental analysis, and the like.

Examples of the ether compound include an alkyl ether with a number of carbon atoms of 4 to 18. The alkyl ether with a number of carbon atoms of 4 to 18 may be, for example, an ether compound represented by a general formula (2): R₁-(OCH₂CH₂)ₙ-OR₂(hereinafter, referred to as alkyl ether compound X). R1 and R2 are each an alkyl group with a number of carbon atoms of 1 to 5, and preferably, an alkyl group with a number of carbon atoms of 1 to 2. "n" is preferably 1 to 4, more preferably 1 to 2. By using the alkyl ether compound X as a main component of the non-aqueous solvent, lithium salt solubility in the non-aqueous electrolyte is increased, and a high flowability and high lithium ion conductivity of the non-aqueous electrolyte are ensured.

The main component of the non-aqueous solvent is, for example, a component with 20 vol% or more of the non-aqueous solvent. The alkyl ether compound X may be, for example, 20 vol% or more and 80 vol% or less of the non-aqueous solvent.

Examples of the alkyl ether compound X include tetrahydrofuran, 1,2-dimethoxyethane (DME), 1,2-diethoxyethane, 1,2-dibutoxyethane, diethyleneglycol dimethylether, diethyleneglycol diethylether, diethyleneglycol ethylmethylether, diethyleneglycol dibutylether, triethyleneglycol dimethylether, and tetraethyleneglycol dimethylether. A kind of alkyl ether compound X may be used singly, or two or more kinds thereof may be used in combination.

For the ether compound, a fluorinated ether compound may be included. The fluorinated ether compound may be, for example, a saturated hydrofluoro ether compound Y represented by a general formula (3): (Cₓ₂H_{y2}F_{z2}) -O-(C_{X3}H_{y3}F_{z3}). In the formula, x2, x3, z2 is an integer of 1 or more, y2, y3, z3 is an integer of 0 or more, and x2+ x3 ≤ 10, 1 ≤ y2+ y3. The saturated hydrofluoro ether compound Y may be, for example, 20 vol% or more and 80 vol% or less of the non-aqueous solvent.

The saturated hydrofluoro ether compound Y may have a fluorinated rate of 60% or more, 80% or more, or 100%. The fluorinated rate of the saturated hydrofluoro ether compound Y is the ratio of the number of the fluorine atom relative to the number of the fluorine atom and hydrogen atom in total in the saturated hydrofluoro ether compound Y represented by percentage (%).

By using the saturated hydrofluoro ether compound Y, interaction between the oxygen in the ether skeleton with lithium ion can be made small. The fluorine atom included in the saturated hydrofluoro ether compound Y has strong electronegativity, which works to attract electrons in the entire molecules of the saturated hydrofluoro ether compound Y into the inner core side. By introducing fluorine into the ether compound, a lone pair of oxygen in the ether skeleton that is originally supposed to interact with lithium ion is decreased in energy level. This decreases the overlapping of the orbits, and therefore interaction between lithium ion and ether weakens. Lithium ion is not easily trapped in the saturated hydrofluoro ether compound Y, and therefore lithium ion tends to be reduced to lithium metal at the negative electrode surface. Therefore, charge/discharge reactions progress more homogeneously.

Specific examples of the saturated hydrofluoro ether compound Y include 1,1,2,2-tetrafluoroethyl 2,2,2-trifluoroethyl ether, and 1,1,2,2-tetrafluoroethyl 2,2,3,3-tetrafluoropropyl ether. A kind of saturated hydrofluoro ether compound Y may be used singly, or two or more kinds thereof may be used in combination.

When the non-aqueous solvent includes the ether compound, the charge/discharge reactions homogeneously progress in the negative electrode, but along with this, lithium metal tends to change in shape. Therefore, the effect of suppressing changes in the lithium metal surface shape by the inorganic fluoride coating derived from the oxalate complex anion including fluorine easily appears. The non-aqueous electrolyte of the present disclosure includes a fluoroalcohol, and therefore the inorganic fluoride coating and the fluoroalcohol interact at a reaction rate that can suppress the changes in the lithium metal surface shape, and a stronger and highly flexible organic fluoride coating may be formed. Thus, even when the non-aqueous solvent includes the ether compound, with the non-aqueous solvent including the fluoroalcohol and oxalate complex anion including fluorine, side reactions caused with lithium metal surface change can be effectively suppressed, and charge/discharge cycle characteristics of the lithium secondary battery can be improved.

In the following, the lithium secondary battery of the present disclosure is described in more detail element by element. However, overly detailed descriptions may be omitted. For example, detailed description for already well-known matters, or repetitive description for the substantially same configuration may be omitted. This is to avoid unnecessary redundancy below and for those in the art to better understand the matter. The following description is provided for those in the art to sufficiently understand the present disclosure, and is not intended to limit the subject matter described in the scope of claims.

### (Positive Electrode)

The positive electrode includes a positive electrode active material. The positive electrode generally includes a positive electrode current collector, and a positive electrode mixture supported on the positive electrode current collector. The positive electrode mixture may contain the positive electrode active material as an essential component, and may contain a binder, a thickener, and a conductive agent as optional components. The positive electrode includes, generally, a layered positive electrode mixture (hereinafter, referred to as a positive electrode mixture layer) supported on the positive electrode current collector. The positive electrode mixture layer can be formed by applying a positive electrode slurry in which the components of the positive electrode mixture are dispersed in a dispersion medium on a surface of the positive electrode current collector, and drying the slurry. The dried coating film may be rolled, if necessary.

For the positive electrode active material, for example, a lithium transition metal composite oxide having a layered rock salt type structure is used. In particular, by using a lithium transition metal composite oxide including Ni and at least one of Co, Al, and Mn (hereinafter, referred to as composite oxide A) as a main component of the positive electrode active material, a high capacity and a high voltage can be exhibited.

The main component of the positive electrode active material is, for example, a component of 50 mass% or more of the positive electrode active material. The composite oxide A preferably is, for example, 50 mass% or more, even more preferably 70 mass% or more, or 90 mass% or more of the positive electrode active material.

The composition of the composite oxide A can be represented by, for example, Li_{α}Ni_{1-a1-a2-a3-b}Coₐ₁Mnₐ₂Alₐ₃M_{b}O_{2+β} (0.95 ≤ α ≤ 1.05, 0.8 ≤ 1-a1 -a2 -a3 -b ≤ 0.99, 0 ≤ a1 ≤ 0.1, 0 ≤ a2 ≤ 0.1, 0 ≤ a3 ≤ 0.1, 0 ≤ b ≤ 0.1, -0.05 ≤ β ≤ 0.05). M is at least one selected from the group consisting of Ti, Zr, Nb, Mo, W, Fe, Zn, B, Si, Mg, Ca, Sr, and Y.

"a3" representing the ratio of Al (atomic ratio) preferably satisfies 0 < a3 ≤ 0.1, or 0.01 ≤ a3 ≤ 0.1 in view of thermal stability and durability.

"a1" representing the ratio of Co (atomic ratio) preferably satisfies 0 < a1 ≤ 0.1, or 0.01 ≤ a1≤ 0.1 in view of output characteristics and durability.

(1-a1 -a2 -a3 -b) representing the ratio of Ni (atomic ratio) preferably satisfy 0.8 ≤ 1-a1 -a2 -a3 -b ≤ 0.99, or 0.9 ≤ 1-a1 -a2 -a3 -b ≤ 0.95 in view of high capacity and stability.

For the material of the positive electrode current collector, for example, foil of metals such as stainless steel, aluminum, aluminum alloy, and titanium, and a film with such a metal disposed on the surface layer thereof can be used. The positive electrode current collector may further include a protection layer including inorganic particles and a binder.

Examples of the conductive agent include carbon powders of carbon black, acetylene black, Ketjen Black, graphite, carbon nanotube, and the like. These may be used singly, or two or more kinds thereof may be used in combination.

Examples of the binder include fluorine resin (e.g., polyvinylidene fluoride, polytetrafluoroethylene), polyolefin resin (e.g., polyethylene, polypropylene), polyamide resin (e.g., aramid resin), polyimide resin (e.g., polyimide, polyamide-imide), acrylic resin (e.g., polyacrylic acid, polymethacrylic acid, acrylic acid-methacrylic acid copolymer, ethylene-acrylic acid copolymer, or a salt thereof), vinyl resin (e.g., polyvinyl acetate), and rubber material (e.g., styrene-butadiene copolymer rubber (SBR)).

Examples of the thickener include cellulose derivatives such as cellulose ether. Examples of the cellulose derivative include carboxymethyl cellulose (CMC) and a modified product thereof, and methylcellulose. The modified CMC includes also CMC salt. Examples of the salt include alkali metal salt (e.g., sodium salt), and ammonium salt.

For the dispersion medium of the positive electrode slurry, for example, N-methyl-2-pyrrolidone (NMP) is used.

In view of obtaining a high capacity battery, the positive electrode mixture layer may have a density of 2.5 g/cc or more, or 3.0 g/cc or more. On the positive electrode mixture layer, a protection layer including inorganic particles and a binder may be formed.

### (Negative Electrode)

The negative electrode includes a negative electrode current collector. During charging, lithium metal deposits on the negative electrode current collector, and lithium metal dissolves during discharging. Lithium ion forming the lithium metal is supplied from the non-aqueous electrolyte, and lithium ion is supplied from the positive electrode to the non-aqueous electrolyte. The negative electrode may include a lithium ion storage layer supported on the negative electrode current collector. The lithium ion storage layer is a layer that includes graphite and the like as the negative electrode active material, and exhibits a capacity by storing and releasing lithium ion by the negative electrode active material. When the negative electrode includes a lithium storage layer, the negative electrode may have an open circuit potential at full charge of 70 mV or less relative to lithium metal (dissolution deposition potential of lithium). When the negative electrode has an open circuit potential at full charge of 70 mV or less relative to lithium metal, lithium metal is present on the surface of the lithium ion storage layer at full charge. That is, the negative electrode exhibits a capacity by deposition and dissolution of lithium metal.

Here, full charge means that the battery is charged until, for example, state of charge of 0.98 × C or more, setting a battery rated capacity as C. The open circuit potential of the negative electrode at full charge can be measured by decomposing a fully charged battery under an argon atmosphere to take out the negative electrode, and assembling a cell with lithium metal as a counter electrode. The non-aqueous electrolyte of the cell may have the same composition as that of the non-aqueous electrolyte of the decomposed battery.

The lithium ion storage layer is the negative electrode mixture including the negative electrode active material formed into a layer. The negative electrode mixture may include, other than the negative electrode active material, a binder, thickener, conductive agent, and the like.

Examples of the negative electrode active material include a carbon material, a Si-containing material, and a Sn-containing material. The negative electrode may include one type of negative electrode active material, or two or more types can be used in combination.

Examples of the carbon material include graphite, graphitizable carbon (soft carbon), and non-graphitizable carbon (hard carbon).

Examples of the Si-containing material include Si simple substance, silicon alloy, and silicon compound (silicon oxide, etc.), and a composite material in which silicon particles (fine Si phase) are dispersed in a lithium ion conductive phase (matrix). Examples of the silicon oxide include SiOₓ particles. X is, for example 0.5 ≤ x < 2, or may be 0.8 ≤ x ≤ 1.6.

Examples of the Sn-containing material include Sn simple substance, and an alloy of silicon and Sn.

For the binder and conductive agent, for example, those exemplified for the positive electrode may be used. The shape and thickness of the negative electrode current collector can be selected from the shapes and ranges according to the positive electrode current collector. For the material of the negative electrode current collector (metal foil), stainless steel, nickel, nickel alloy, copper, copper alloy, or the like can be exemplified.

### (Non-aqueous Electrolyte)

The non-aqueous electrolyte includes non-aqueous liquid electrolytes, gel electrolytes, and solid electrolytes, and excludes an aqueous solution electrolyte. The gel electrolyte and solid electrolyte may be an electrolyte with no flowability, in which a non-aqueous electrolyte and a gelling agent or a matrix material are formed into a composite.

The non-aqueous electrolyte includes a fluoroalcohol, an oxalate complex anion including fluorine, lithium ions, and a non-aqueous solvent. For example, the non-aqueous electrolyte may include a fluoroalcohol, a non-aqueous solvent, and a lithium salt that is dissolved in the non-aqueous solvent, and the lithium salt may include an oxalate complex lithium including fluorine. However, the oxalate complex anion including fluorine is not necessarily derived from the lithium salt, and may be derived from, for example, a salt of metal cation other than lithium and an oxalate complex anion including fluorine.

The lithium salt may further include, for example, LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, lithium borate, and imide lithium. These may be used singly, or two or more kinds thereof may be used in combination.

Examples of the imide lithium include lithium bis(fluorosulfonyl)imide (LiN(FSO₂)₂) (hereinafter, referred to as LiFSI), lithium bis(trifluoromethylsulfonyl) imide (LiN(CF₃SO₂)₂), lithium trifluoromethylsulfonyl fluorosulfonyl imide (LiN(CF₃SO₂) (FSO₂)), lithium trifluoromethylsulfonyl nonafluorobutyl sulfonyl imide (LiN(CF₃SO₂) (C₄F₉SO₂)), and lithium bis(pentafluoroethylsulfonyl) imide (LiN(C₂F₅SO₂)₂).

The non-aqueous electrolyte may have a total lithium salt concentration of, for example, 0.5 mol/L or more, 2 mol/L or less.

For the non-aqueous solvent, the already described ether compound, or other compound may be used. For example, as at least a portion of the non-aqueous solvent, a cyclic carbonate, a chain carbonate, a cyclic carboxylate, a chain carboxylate, and a non-fluorinated chain ether other than alkyl ether compound X may be used. Examples of the cyclic carbonate include propylene carbonate (PC), ethylene carbonate (EC), and the like. Examples of the chain carbonate include diethyl carbonate (DEC), ethyl methyl carbonate (EMC), and dimethyl carbonate (DMC). Examples of the cyclic carboxylate include γ-butyrolactone (GBL) and γ-valerolactone (GVL). Examples of the chain carboxylate include methyl formate, ethyl formate, propyl formate, methyl acetate (MA), ethyl acetate, propyl acetate, methyl propionate, ethyl propionate, and propyl propionate.

### (Separator)

Usually, it is desirable to interpose a separator between the positive electrode and the negative electrode. The separator has excellent ion permeability and suitable mechanical strength and electrically insulating properties. The separator may be, for example, a microporous thin film, a woven fabric, or a nonwoven fabric, or at least two laminates selected from these can be used. Preferably, the separator material is polyolefin (e.g., polypropylene, polyethylene).

### (Other)

In an example structure of the lithium secondary battery, an electrode group and a non-aqueous electrolyte are accommodated in an outer package, and the electrode group has a positive electrode and a negative electrode wound with a separator interposed therebetween. Alternatively, instead of the wound-type electrode group, other forms of electrode groups may be applied, such as a laminated electrode group in which the positive electrode and the negative electrode are laminated with a separator interposed therebetween. The lithium secondary battery may be any shape of, for example, a cylindrical shape, a rectangular shape, a coin-shape, a button shape, or a laminate shape.

### [Examples]

Hereinafter, the present invention will be specifically described based on Examples and Comparative Examples, but the present invention is not limited to the following Examples.

### (Example 1)

### (1) Production of positive electrode

100 parts by mass of the positive electrode active material particles (composition: LiNi_{0.9}Co_{0.05}Al_{0.05}O₂), 1 part by mass of acetylene black, 1 part by mass of polyvinylidene fluoride, and a suitable amount of NMP were mixed, thereby producing a positive electrode slurry. Next, the positive electrode slurry was applied to both surfaces of an aluminum foil (positive electrode current collector), and the coating film was dried, and then rolled to prepare a positive electrode having a positive electrode mixture layer (thickness 95 µm, density 3.6 g/cm³) on both surfaces of the aluminum foil.

### (2) Production of negative electrode

The negative electrode (negative electrode current collector) was made by cutting an electrolytic copper foil (thickness 10 µm) into a predetermined size.

### (3) Preparation of non-aqueous electrolyte

To a mixture solution of a non-aqueous solvent including propylene carbonate (PC) and 1,2-dimethoxyethane (DME) as the ether compound at a volume ratio of 1:2, 2,2,2-trifluoroethanol as a fluoroalcohol was added at a concentration of 10 ppm, and lithium hexaflurophosphate (LiPF₆) as a Li salt was dissolved at a concentration of 1 mol/L, and further lithium difluorooxalateborate (LiFOB) as oxalate complex lithium salt including fluorine was dissolved at a concentration of 100 mmol/L to prepare a non-aqueous electrolyte.

### (4) Production of lithium secondary battery

An aluminum-made tab was attached to the positive electrode, and a nickel-made tab was attached to the negative electrode. Then, the positive electrode, negative electrode, and separator were disposed so that the separator was disposed between the positive electrode and negative electrode, and they were wound into a swirl. The wound electrode group was accommodated in a bag type outer case formed of a laminate sheet including an aluminum layer. After injecting the non-aqueous electrolyte into the outer case, the outer case was sealed to obtain a cell A1 of lithium secondary battery for evaluation.

### (Example 2)

The concentration of 2,2,2-trifluoroethanol used for the non-aqueous electrolyte in Example 1 was changed to 50 ppm. Except for this, a cell A2 was produced in the same manner as in Example 1.

### (Example 3)

The concentration of 2,2,2-trifluoroethanol used for the non-aqueous electrolyte in Example 1 was changed to 250 ppm. Except for this, a cell A3 was produced in the same manner as in Example 1.

### (Example 4)

The concentration of 2,2,2-trifluoroethanol used for the non-aqueous electrolyte in Example 1 was changed to 1000 ppm. Except for this, a cell A4 was produced in the same manner as in Example 1.

### (Example 5)

1,1,2,2-tetrafluoroethyl 2,2,2-trifluoroethyl ether (HFE) was used instead of DME used for the non-aqueous solvent in Example 1. Except for this, a cell A5 was produced in the same manner as in Example 1.

### (Example 6)

The concentration of LiFOB used for the non-aqueous electrolyte in Example 1 was changed to 300 mmol/L. Except for this, a cell A6 was produced in the same manner as in Example 1.

### (Example 7)

2,2,3,3,3-pentafluoro-1-propanol was used instead of 2,2,2-trifluoroethanol used for the non-aqueous electrolyte in Example 1. Except for this, a cell A7 was produced in the same manner as in Example 1.

### (Comparative Example 1)

None of LiFOB and 2,2,2-trifluoroethanol used for the non-aqueous electrolyte in Example 1 was included in the non-aqueous electrolyte. Except for this, a cell B1 was produced in the same manner as in Example 1.

### (Comparative Example 2)

LiFOB used for the non-aqueous electrolyte in Example 1 was not included in the non-aqueous electrolyte. Except for this, a cell B2 was produced in the same manner as in Example 1.

### (Comparative Example 3)

2,2,2-trifluoroethanol used for the non-aqueous electrolyte in Example 1 was not included in the non-aqueous electrolyte. Except for this, a cell B3 was produced in the same manner as in Example 1.

### (Comparative Example 4)

DME used for the non-aqueous solvent in Example 1 was not included in the non-aqueous electrolyte. Except for this, a cell B4 was produced in the same manner as in Example 1.

### (Comparative Example 5)

The concentration of 2,2,2-trifluoroethanol used for the non-aqueous electrolyte in Example 1 was changed to 5000 ppm. Except for this, a cell B5 was produced in the same manner as in Example 1.

### (Battery evaluation)

### (Charge/discharge cycle characteristics)

The cell for evaluation was subjected to constant current charging at a current of 0.3 It until the voltage reached 4.1 V under a 25°C temperature environment, and thereafter subjected to constant voltage charging at a constant voltage of 4.1 V until the electric current reached 0.05 It. Then, the cell was subjected to constant current discharging at an electric current of 0.3 It until the voltage reached 2.5 V. This charge/discharge cycle was repeated 20 cycles, and the ratio of the discharge capacity at 20th cycle relative to the discharge capacity (Ci) at the 1st cycle was determined as a capacity retention rate (R₂₀). Table 1 shows the results.

**[Table 1]**

| Cell | Fluoroalcohol A | | LiFOB | Ether Compound | Capacity retention rate (R20)/% |
|---|---|---|---|---|---|
| | Type | Concentration (ppm) | Concentration (mmol/L) | type | |
| A1 | Trifluoroethanol | 10 | 100 | DME | 95.3 |
| A2 | Trifluoroethanol | 50 | 100 | DME | 96.6 |
| A3 | Trifluoroethanol | 250 | 100 | DME | 95.5 |
| A4 | Trifluoroethanol | 1000 | 100 | DME | 94.7 |
| A5 | Trifluoroethanol | 10 | 100 | HFE | 96.1 |
| A6 | Trifluoroethanol | 10 | 300 | DME | 94.2 |
| A7 | Pentafluoro propanol | 10 | 100 | DME | 94.5 |
| B1 | - | - | - | DME | 93.8 |
| B2 | Trifluoroethanol | 10 | - | DME | 94.0 |
| B3 | - | - | 100 | DME | 93.2 |
| B4 | Trifluoroethanol | 10 | 100 | - | 87.9 |
| B5 | Trifluoroethanol | 5000 | 100 | DME | 93.0 |

Table 1 shows that, based on comparison between Example 1 and Comparative Examples 2 and 3, when the non-aqueous electrolyte includes only one of fluoroalcohol and oxalate complex anion including fluorine, the capacity retention rate at 20th cycle showed almost no improvement, whereas in Examples including both of the fluoroalcohol and oxalate complex anion including fluorine in the non-aqueous electrolyte, the 20th cycle capacity retention rate improved significantly.

Based on Example 1 and Comparative Example 4, when the non-aqueous electrolyte includes the ether compound, compared with the case where the non-aqueous electrolyte does not include the ether compound, the 20th cycle capacity retention rate improved significantly. Example 5 shows that, particularly when the non-aqueous electrolyte includes the saturated hydrofluoro ether compound Y, the effects of improvement in capacity retention rate based on the fluoroalcohol and oxalate complex anion including fluorine are brought out significantly.

### [Industrial Applicability]

The present disclosure can be used for a lithium secondary battery, in which lithium metal deposits during charging and lithium metal dissolves during discharging.

## Claims

1. A lithium secondary battery comprising: a positive electrode, a negative electrode, a separator disposed between the positive electrode and the negative electrode, and a non-aqueous electrolyte, wherein
in the negative electrode, lithium metal deposits during charging and the lithium metal dissolves during discharging,
the non-aqueous electrolyte includes a fluoroalcohol, an oxalate complex anion including fluorine, a lithium ion, and a non-aqueous solvent, and
the non-aqueous electrolyte has a fluoroalcohol content of 5 to 1500 ppm.

2. The lithium secondary battery of claim 1, wherein the fluoroalcohol includes a fluoroalcohol A represented by a general formula (1): R-OH (R = Cₓ₁H_{y1}F_{z1}; x1 and z1 are an integer of 1 or more, y1 is an integer of 0 or more).

3. The lithium secondary battery of claim 1 or 2, wherein the fluoroalcohol A includes at least one selected from 2,2,2-trifluoroethanol, 2,2,3,3,3-pentafluoro-1-propanol, and 2,2,3,3-tetrafluoro-1 -propanol.

4. The lithium secondary battery of any one of claims 1 to 3, wherein the non-aqueous electrolyte includes the oxalate complex anion including fluorine of 0.1 to 500 mmol/L.

5. The lithium secondary battery of claim 4, wherein the oxalate complex anion including fluorine includes difluorooxalateborate anion.

6. The lithium secondary battery of any one of claims 1 to 5, wherein the non-aqueous solvent includes an ether compound.

7. The lithium secondary battery of claim 6, wherein the ether compound includes an alkyl ether compound X represented by a general formula (2): R₁-(OCH₂CH₂)ₙ-OR₂ (R₁ and R₂ are each an alkyl group with a number of carbon atoms of 1 to 5, n is an integer of 1 or more).

8. The lithium secondary battery of claim 6 or 7, wherein the ether compound includes a saturated hydrofluoroether compound Y represented by a general formula (3): (Cₓ₂H_{y2}F_{z2})-O-(Cₓ₃H_{y3}F_{z3}) (where, x2, x3, z2 are an integer of 1 or more, y2, y3, z3 are an integer of 0 or more and x2+ x3 ≤ 10, 1 ≤ y2+ y3).

9. The lithium secondary battery of any one of claims 6 to 8, wherein in the non-aqueous electrolyte, a ratio of the ether compound is 50 vol% or more.
